(19) **Europäisches Patentamt**

**European Patent Office**

**Office européen des brevets**

(11) **EP 0 962 660 B1**

(12) **EUROPEAN PATENT SPECIFICATION**

(45) Date of publication and mention
of the grant of the patent:
**30.05.2001 Bulletin 2001/22**

(51) Int Cl.⁷: **F04D 29/66**, H02K 15/16,
F16F 15/32

(21) Application number: **99830222.8**

(22) Date of filing: **16.04.1999**

(54) **A method for assembling an electric fan**

Herstellungsverfahren eines elektrischen Lüfters

Procédé d' assemblage d'un ventilateur électrique

(84) Designated Contracting States:
**DE ES FR GB SE**

(30) Priority: **05.06.1998 IT TO980490**

(43) Date of publication of application:
**08.12.1999 Bulletin 1999/49**

(73) Proprietor: **MAGNETI MARELLI
CLIMATIZZAZIONE S.p.A.
10046 Poirino (Torino) (IT)**

(72) Inventor: **Pugliese, Vincenzo
10046 Poirino, Torino (IT)**

(74) Representative: **Marchitelli, Mauro et al
Buzzi, Notaro & Antonielli d'Oulx Srl,
Corso Fiume 6
10133 Torino (IT)**

(56) References cited:
**DE-A- 19 501 959          FR-A- 1 367 106**

• **PATENT ABSTRACTS OF JAPAN vol. 9, no. 286
(M-429), 13 November 1985 (1985-11-13) & JP 60
125800 A (MATSUSHITA DENKI SANGYO), 5 July
1985 (1985-07-05)**

## Description

The present invention relates to a method for assembling an electric fan.

The invention has been developed with particular reference to electric fans for heating, air-conditioning and engine cooling units for vehicles, including a plastics material or aluminium fan coaxial with the rotor of an electric motor. The fan and the rotor are mechanically connected to each other in various ways (screwing, fitting with interference and the like). Each of these two members, separately, is statically unbalanced of a certain quantity, which can be measured in general as:

$$S=ME \times d$$

where:

ME =    eccentric mass, and
d =    distance from the axis of rotation.

The rotor-fan unit after assembly is in its turn unbalanced of a total quantity equal to the vectorial sum of the two initial unbalance.

JP-A-60 125 800 discloses a method wherein a spatial position difference between a remaining unbalance mass on the left correcting surface of a rotor and the remaining unbalance mass on the right correcting surface of the rotor are brought into the same phase spatially to reduce the component of axial vibration near the outer periphery of a casing.

In order -to reduce the total unbalance to acceptable values, in the known assembly methods the step of connecting the fan to the rotor is followed by a step of controlling the residual unbalance and, if the total unbalance is higher than a predetermined value, by a balancing step. Such balancing requires the application of weights with suitable mass in suitable positions, so that the unbalance of the rotating member is brought below a prescribed limit. This operation requires a time that has a significant influence on the assembly cost.

The present invention has the object to provide a method for assembling an electric fan which is not affected by said drawback. According to the invention, this object is achieved by a method having the features forming the subject of the main claim.

The method according to the invention consists essentially in assembling the fan and the rotor of the electric motor with opposed unbalance vectors. In this way, the total unbalance is equal to the arithmetical difference of the initial unbalances of the two components. The total unbalance of the fan-rotor unit in the great majority of cases will be smaller than the prescribed limit which requires a separate balancing operation. In this way it is possible either to reduce considerably or to totally nullify the time required for balancing the electric fans.

Further characteristics and advantages of the present invention will become clear in the course of the detailed description which follows, given purely by way of non-limiting example, with reference to the annexed drawings, in which:

- figure 1 is a schematic lateral view of a rotor-fan unit,
- figures 2 and 3 schematically show the rotor and the fan with the respective static unbalance vectors, and
- figure 4 is a perspective view which schematically shows the rotor and the fan mounted with the respective static unbalance vectors in phase opposition.

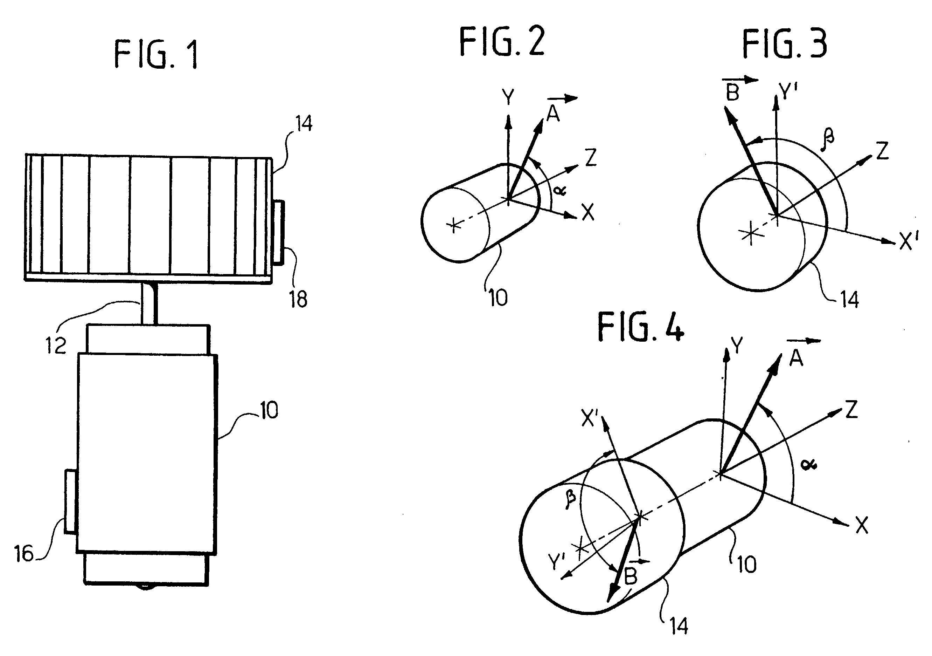

With reference to the drawings, 10 indicates the rotor of an electric motor, having a shaft 12 on which a fan 14 is fixed by means of any known connection system. Both the rotor 10 and the fan 14 have static unbalances which in figure 1 are schematically represented by eccentric masses respectively indicated 16 and 18. This representation is purely fictitious because usually the static unbalances are not formed by a concentrated mass, but rather by an asymmetric distribution of the total mass with respect to the axis of rotation. However, the end effect of the static unbalance of a rotating member can be represented by a concentrated eccentric mass.

With reference to figures 2 and 3, the static unbalance of rotor 10 and fan 14 are represented by two vectors A and B each of which has an amplitude proportional to the product of the concentrated eccentric mass by its distance from the axis of rotation. Each vector representing the unbalance has furthermore a characteristics phase angle indicated respectively by $\alpha$ and $\beta$ which locates the positions of the unbalance vector with respect to a coordinate system X, Y and X', Y'.

In accordance with the method according to the present invention, the fan 14 is rotated about its own axis in order to determine the orientation $\beta$ of its unbalance vector B. This position is marked for a subsequent use in the assembly line or the fan is positioned such that the orientation of the unbalance vector is known.

During the preparation of the rotor 10 or in the subsequent testing of the motor without the fan, the rotor is mechanically rotated, so as to determine the orientation $\alpha$ of the unbalance vector A. This position is marked for a subsequent use on the assembly line or the motor is positioned so that the orientation of the unbalance vector is known.

The final connection of the fan 14 on the rotor 10 is made so as to oppose the two unbalance vectors A e B, as schematically shown in figure 4. In the condition in which $\alpha=\beta-180°$, the total static unbalance of the rotor-fan unit has an amplitude given by the difference between the absolute values of the unbalance vectors A and B.

In this way, in a mass production the number of balancing operations necessary for bringing the total unbalance below a predetermined level will be considerably reduced. The balancing will be requested only in the few cases in which the arithmetic difference between the two static unbalance remains greater than the predetermined threshold value.

## Claims

1. A method for assembling an electric fan including a fan (14) connected to the rotor (10) of an electric motor, characterized in that it comprises the steps of:

   - determining the orientation of the unbalance vectors (A, B) both of the fan (14) and of the rotor (10), and
   - mounting the fan (14) and the rotor (10) so that the respective unbalance vectors (A, B) are in a phase opposition to each other.

2. A method according to claim 1, characterized in that the rotor and the fan are marked for indicating the positions of the unbalance vectors and are assembled to each other with the respective markings in diametrically opposed positions.

3. A method according to claim 1, characterized in that the fan and the rotor are moved positioned so that the orientations of the respective unbalance vectors is known and are assembled so as to place in diametrically opposed positions the known locations of the respective unbalance vectors.

## Patentansprüche

1. Herstellungsverfahren eines elektrischen Lüfters mit einem an den Rotor (10) eines Elektromotors angeschlossenen Lüfter (14), dadurch gekennzeichnet, daß es die Schritte umfaßt:

   - Bestimmen der Ausrichtung der Unwuchtvektoren (A, B) sowohl des Lüfters (14) als auch des Rotors (10), und
   - Montieren des Lüfters (14) und des Rotors (10) derart, daß die jeweiligen Unwuchtvektoren (A, B) in einer Gegenphase zueinander sind.

2. Verfahren gemäß Anspruch 1, dadurch gekennzeichnet, daß der Rotor und der Lüfter zur Angabe der Positionen der Unwuchtvektoren markiert und so zusammengesetzt werden, daß die jeweiligen Markierungen einander diametral gegenüberliegen.

3. Verfahren gemäß Anspruch 1, dadurch gekennzeichnet, daß der Lüfter und der Rotor in Bewegung positioniert werden, so daß die Ausrichtungen der jeweiligen Unwuchtvektoren bekannt sind, und so zusammengesetzt werden, daß die bekannten Lagen der jeweiligen Unwuchtvektoren diametral gegenüberliegend plaziert werden.

## Revendications

1. Procédé d'assemblage d'un ventilateur électrique comprenant un ventilateur (14) raccordé au rotor (10) d'un moteur électrique, caractérisé en ce qu'il comprend les étapes consistant :

   - à déterminer l'orientation des vecteurs de déséquilibre (A, B) à la fois du ventilateur (14) et du rotor (10), et
   - à monter le ventilateur (14) et le rotor (10) de telle sorte que les vecteurs de déséquilibre respectifs (A, B) soient en opposition de phase l'un par rapport à l'autre.

2. Procédé selon la revendication 1, caractérisé en ce que le rotor et le ventilateur sont marqués pour indiquer les positions des vecteurs de déséquilibre et sont assemblés l'un avec l'autre avec les marques respectives dans des positions diamétralement opposées.

3. Procédé selon la revendication 1, caractérisé en ce que le ventilateur et le rotor sont déplacés dans des positions telles que les orientations des vecteurs de déséquilibre respectifs soient connues et sont assemblés de manière à placer dans des oppositions diamétralement opposées les emplacements connus des vecteurs de déséquilibre respectifs.

FIG. 1

FIG. 2

FIG. 3

FIG. 4